# EUROPEAN PATENT SPECIFICATION

(11) **EP 2 551 095 B1**
(45) Date of publication and mention of the grant of the patent: **21.09.2016**
(21) Application number: 12172719.2
(22) Date of filing: 20.06.2012
(51) Int. Cl.: B29D 28/00, B29C 47/12, B29L 28/00

(54) **REINFORCEMENT PRODUCT FOR GEOTECHNICAL APPLICATIONS, PROCESS OF MANUFACTURING AND USE OF THE REINFORCEMENT PRODUCT**
VERSTÄRKUNGSPRODUKT FÜR GEOTECHNISCHE ANWENDUNGEN, VERFAHREN ZU SEINER HERSTELLUNG UND VERWENDUNG DES VERSTÄRKUNGSPRODUKTS
PRODUIT DE RENFORCEMENT POUR APPLICATIONS GÉOTECHNIQUES, PROCÉDÉ POUR LE FABRIQUER ET USAGE DU DIT PRODUIT DE RENFORCEMENT

(30) Priority: 29.07.2011 IT MI20111450
(43) Date of publication of application: 30.01.2013
(73) Proprietor: Tenax S.p.A., 23897 Viganò (Lecco) (IT)
(72) Inventor: Beretta, Cesare, 23897 Vigano' (Lecco) (IT); Maggioni, Pierluigi, 23897 Vigano' (Lecco) (IT)
(74) Representative: Sutto, Luca

(56) References cited:
- CH-A- 409 374
- GB-A- 836 555
- GB-A- 2 253 669
- US-A- 3 952 127
- US-A1- 2007 056 899

## Description

### FIELD OF THE INVENTION

The present invention relates to a reinforcing product for geotechnical applications, usable for reinforcing terrains. The present invention further describes a method for production and use of the reinforcing product. For example the reinforcing element of the invention is applicable for reinforcing natural and artificial structures. In particular, applicational examples are represented by natural slopes which require consolidation and/or reinforcement, green wall, block walls, artificial walls, coverings of rocky verges, containment of landslides.

### STATE OF THE ART

As is known, net structures are available on the market for reinforcing, containing and stabilising and/or consolidation of terrain with the aim of preventing landslides and/or in order to guarantee a greater stability of terrain, including in the presence of natural events such as earthquakes, floods or others besides.

A known technical solution comprises use of reinforced nets realised using woven metal wires or coupled to one another such as to realise a net structure. The net structures are inserted or applied to the terrain or slope to be reinforced.

Although these technical solutions have been widely used in the past, they exhibit a considerable number of drawbacks connected to production costs, weaving process difficulties or problems with the coupling of metal wires, and therefore related to the complexity of realising the net structure, as well as drawbacks connected with the structural capacity of the finished product and its ability to resist corrosive agents.

Together with the described technical solution, grids have been widely used for geotechnical applications, made of plastics such a high-density polyethylene (HDPE).

A first example of a net structure made of plastic material includes realising, by extrusion, a monoplanar slab having a constant section from which a product is obtained in a single piece. The semi-finished workpiece in slab form is then perforated, either hot or cold, such as to create a plurality of through-holes. The perforated slab thus formed is in fact a monoplanar net structure in which longitudinal and transversal elements can be visually identified, reciprocally intersecting at join or node zones where, given the forming process of the perforated slab, the material forming the longitudinal elements is undistinguishable and in common with the material forming the transversal elements.

The net structure is then stretched, using monodirectional or bidirectional stretching, from which a stretched net structure is obtained. The stretching of the elements enables attributing to the structure a greater resistance to traction with respect to a non-stretched net. Also, the holes created in the workpiece enable reduction of its weight and consequently the costs thereof.

The described product, notwithstanding the stretching action, exhibits a certain spatial discontinuity in the arrangement of the polymer chains, due to the presence of the nodes: in particular, in proximity of the nodes the material offers maximum resistance to the stretching and is not subject, or is non-uniformly subject, to the stretching action, at least partly compromising the uniformity of the molecular orientation which, as mentioned, is responsible for the increase in resistance to traction. In other words, following the stretching, a product is obtained that is made up of an alternation of significantly stretched zones, and thus having high specific resistance, with non-stretched or minimally-stretched zones, and thus having low specif resistance. This discontinuity represents the weak link of the product, in particular in relation to the ability thereof to support loads over long time periods.

A second example of a net structure made of a plastic material includes extrusion of a series of first elements distanced from one another and a series of second elements, also distanced from each other. The first and the second elements are joined such as to define a monolithic grid by co-extrusion of the second elements on the first elements just formed. In other words, a series of first longitudinal elements is coextruded with a series of second transversal elements such as essentially to define a monolithic grid in which, at joining nodes, the material of the first and the second grid elements co-penetrate. Following formation thereof, the co-extruded grid is subjected to a monodirectional or bi-directional stretching. As described herein above, the step of stretching enables increasing the structural resistance along a direction. The form of the product makes it adequate as a stabilising element or containing element.

Document US 3 952127 describes an extruded integral plastics net structure comprising first sets of spaced parallel strands, second sets of spaced parallel strands extending transversely thereto. The sets of strands are joined together at all or certain of their points of intersection to form a net structure wherein the intersection points along any one strand are in the alternating forms of any two of the following: (a) integral masses of mirror image symmetry about the median plane of the net, (b) asymmetrical junctions in which there is substantially only linear contact and adhesion between the strands and (c) symmetrical junctions having only linear contact with little or no adhesion between the strands.

The described plastic net structures are chemically inert and have a resistance to traction in the direction of the stretched elements that is very high and thus guarantees net structures that are economical and have mechanical characteristics that are adequate for geotechnical uses as described above. Further, the openings present straddling the elements constituting the net structure enable the terrain to insert, guaranteeing formation of a reinforced composite material. In practice, the reinforced terrain with the net structures described above exhibits improved structural characteristics as the net structures are able to grant rigidity and stability, absorbing the stresses and redistributing them in the reinforce mass of the soil, definitively guaranteeing a greater static resistance and a greater dynamic resistance.

Although the described product has had considerable success due to its mechanical characteristics, and the ability to be chemically inert, together with the possibility of relatively economical costs, the stretching action does not spread uniformly over the whole product, which has a poor molecular orientation at the nodes. In fact, at the intersections between elements composing the net structure there are strong concentrations of material, in which material of the first elements is strongly copenetrated with the material of the second elements, forming zones which on stretching are poorly yielding to stretching with respect to the central zones of the elements: consequently the stretching action is essentially concentrated on the zones of the intermediate elongate elements between consecutive nodes with a consequent poor crystallisation of the node zones. This non-uniformity of stretching and crystallisation leads to a resistance to traction that is not optimal. Consequently, it is not possible to fully exploit the mechanical characteristics of the material making up the grid.

There is, lastly, a third type of plastic net product in which first elements and second elements are separately realised. The first or second elements are stretched and only following stretching are first joined to the second elements, for example by gluing, to form a net structure. Although the structure obtained with the described process can be well controlled, there is the need to introduce a separate step of assembly in order to complete the product, which has a significant impact on production costs.

### SUMMARY

The aim of the present invention is therefore to obviate one of more of the drawbacks and limits in the preceding solutions.

A first aim of the invention is to make available a net structure for reinforcing terrains having a high mechanical resistance and a structural uniformity.

A further aim of the invention is to realise a net product having a smaller weight with respect to the plastic monolithic net structures at present on the market.

A further aim of the invention is to obtain a net product for geotechnical applications able to be easily applied and to adapt to any arrangement internally of the terrain or the surface thereof.

A further aim of the invention is to obtain a product which, thanks to its intrinsic flexibility, can be arranged in various layers without losing structural continuity, including in low-temperature environmental conditions.

An additional aim of the invention is to provide a net product which is intrinsically able to guarantee a high resistance, including in a case of breakage of one or more elements.

One or more of above-described aims, which will better emerge during the course of the following description, are substantially attained by a reinforcing product according to one or more of the accompanying claims.

In a first aspect a reinforcing product is provided for geotechnical applications having a net structure made of a plastic material, comprising: a plurality of first elements, distanced from one another, a plurality of second elements, distanced from one another, which develop substantially in a transversal direction to the first elements and are connected to the first elements at a plurality of join zones in order to form a plurality of meshes of the net structure, wherein at least the second elements, subsequent to formation and connection thereof with the first elements, are stretched along an extension thereof and exhibit a structure having molecular chains oriented along the stretching direction, said stretched second elements exhibiting, along an extension thereof, a degree of polymer crystallinity, between an intermediate point between two consecutive join zones and a point localised at the join zone of less than 8%

In a 2nd aspect according to the first aspect, the variation in degree of crystallinity, between an intermediate point located between two consecutive join zones and a point located at the join zone, is of less than 5%.

In a 3rd aspect, according to the first aspect, the variation in the degree of crystallinity, between an intermediate point between two consecutive join zones and a point located at the join zone is less than 3%.

In a 4th aspect according to any one of the preceding aspects, the degree of crystallinity is measured as described herein below: a DSC Mettler Toledo analytic instrument, with temperature accuracy of ±0.2K and a precision of 0.02K. The analytic method comprises a heating of the 10 mg sample of from 25°C to 180°C (for HDPE) or from 25°C to 230°C (for PP) with an ascendant ramp of 10°C/min, followed by a cooling at the same gradient and a subsequent heating, using the same derivative. The two latter operation were performed to verify that the analysis was performed correctly. The 10mg samples are taken from the elements (for example first and/or second elements) at the transversal section of interest at which the degree of crystallinity can be measured. Note further that for the purposes of measuring the values relative to the degree of crystallinity relating to the present description and the claims, the samples of material have to removed from a central zone of each transversal section of the element, in order to prevent the influence of peripheral conditions; the central zone is substantially located internally of the edge of the transversal section of the material sample, at a position from the edge that is substantially equal to half the thickness of the transversal sample section. In the case of first and second elements having a full and symmetrical transversal section with respect to one or more axes of symmetry (for example circular, rectangular or square) the sample point is located on the axis or at the centre of symmetry. The enthalpy jump is obtained from the DSC analyses, which jump relates to the step of fusion of tested sample; this value in relation to the enthalpy fusion value of an HDPE (or PP) obtained in the laboratory and 100% crystalline (values in the literature) provides the percentage of crystallinity of the test sample.

In a 5th aspect according to any one of the preceding aspects, the second elements are formed of a stretched plastic material having, along a tract of extension of the second elements comprising two or more consecutive join zones, a change in degree of crystallinity that is less than 8%.

In a 6th aspect according to any one of the preceding aspects, the second elements are formed of a stretched plastic material having, along a tract of extension of the second elements comprising two or more consecutive join zones, a change in degree of crystallinity that is less than 5%.

In a 7th aspect according to any one of the preceding aspects, the second elements are formed of a stretched plastic material having, along a tract of extension of the second elements comprising two or more consecutive join zones, a change in degree of crystallinity that is less than 3%.

In an 8th aspect according to any one of the preceding aspects, the mean degree of crystallinity of the polymer forming the second elements is greater than 55%, the mean degree of crystallinity of the polymer forming the second elements being greater than a mean degree of crystallinity of the polymer forming the first elements.

In a 9th aspect according to any one of the preceding aspects, the mean degree of crystallinity of the polymer forming the second elements greater than 60%, the mean degree of crystallinity of the polymer forming the second elements being greater than a mean degree of crystallinity of the polymer forming the first elements.

In a 10th aspect according to any one of the preceding aspects, the mean degree of crystallinity of the polymer forming the second elements is greater than 63%, the mean degree of crystallinity of the polymer forming the second elements being greater than a mean degree of crystallinity of the polymer forming the first elements.

In an 11th aspect according to any one of the preceding aspects, the stretched elements exhibit a width, measured transversally thereto, that is substantially constant along the respective extension.

In a 12th aspect according to any one of the preceding aspects, the second elements (4) exhibit, along the respective extension, a transversal direction having a substantially constant area.

In a 13th aspect according to any one of the preceding aspects, the first elements lie, at least at the join zones, on a prevalent extension surface of the first elements and passing through a central zone of the thickness of the first elements at the join zones.

In a 14th aspect according to any one of the preceding aspects, the second elements lie on a prevalent extension surface of the second elements and passing through a central zone of the thickness of the second elements at the join zone. In a 15th aspect according to any one of the preceding aspects, the prevalent extension surface of the first elements is different from the surface of prevalent extension of the second elements.

In a 16th aspect according to aspects 13 or 14 or 15, the prevalent extension surface of the first elements is a plane.

In a 17th aspect according to aspects 14 or 15 or 16, the prevalent extension surface of the second elements is a plane.

In an 18th aspect according to the preceding aspect, the plane defined by the prevalent extension surface of the first elements is parallel to and distanced from the plane defined by the prevalent extension surface of the second elements (obviously reference is made to a condition in which the product is stretched out).

In a 19th aspect according to any one of aspects from 13 to 18, the net structure is substantially a three-dimensional structure defined by a superposing of the first and the second elements.

In a 20th aspect according to any one of the preceding aspects, the first and the second elements (3, 4), at the join zone, define a surface of mutual connection. In a 21 st aspect according to the preceding aspect the ratio between the extension of the surface of mutual connection in a perpendicular direction to the stretching direction is less than 0.4 with respect to the width of the second elements, also measured along the perpendicular direction.

In a 22nd aspect according to aspects 20 or 21, the ratio between the extension of the surface of mutual connection in a perpendicular direction to the stretching direction is less than 0.3 with respect to the width of the second elements, also measured along the perpendicular direction.

In a 23rd aspect according to the preceding aspect, the ratio between the extension of the surface of mutual connection in a perpendicular direction to the stretching direction is less than 0.2 with respect to the width of the second elements, also measured along the perpendicular direction.

In a 24th aspect according to any one of the preceding aspects, the second elements exhibit a stretching ratio, defined as a ratio between a final length of the second elements once stretched and an initial length of the second elements before the stretching action that is greater than 3.

In a 25th aspect according to the preceding aspect the stretching ratio of the second elements is comprised between 3 and 10.

In a 26th aspect according to the preceding aspect the stretching ration of the second elements is comprised between 4 and 8.

In a 27th aspect according to any one of the preceding aspects, the stretched second elements exhibit a specific stretching, at an intermediate transversal section between two consecutive join zones, which is not greater than 10% with respect to a specific stretching of a transversal section of the stretched second elements in the join zone.

In a 28th aspect according to any one of the preceding aspects, the first elements (3) exhibit a stretch ratio, defined as a ratio between a final length of the first elements (3) once stretched and an initial length of the first elements (3) before the stretching action that is lower than the stretching ratio of the second elements.

In a 29th aspect according to the preceding aspect, the stretching ratio of the first elements is comprised between 1 and 1.5.

In a 30th aspect according to the preceding aspect, the first elements are not subjected to a stretching action.

In a 31 st aspect according to any one of the preceding aspects, the first and the second elements comprise at least one, selected from the group, of the following materials: HDPE, PP.

In a 32nd aspect according to any one of the preceding aspects, the first elements are realised from one or more different materials from one or more of the materials with which the second elements are realised.

In a 33rd aspect according to any one of the preceding aspects, the first elements exhibit a transversal section having an area of greater than 20mm².

In a 34th aspect according to any one of the preceding aspects, the first elements exhibit a transversal section having an area of greater than 30mm².

In a 35th aspect according to any one of the preceding aspects, the second elements exhibit a transversal section having an area of greater than 10mm².

In a 36th aspect according to any one of the preceding aspects, the second elements exhibit a transversal section having an area of greater than 12mm².

In a 37th aspect according to any one of the preceding aspects, the first elements exhibit a transversal section having an area of greater than twice the transversal section of the second elements.

In a 38th aspect according to any one of the preceding aspects, the first elements exhibit a transversal section having an area of greater than at least 2.5 times the transversal section of the second elements.

In a 39th aspect according to any one of the preceding aspects, the net structure exhibits a specific weight that is greater than 200 g per m², optionally between 400 and 1200 g per m².

In a 40th aspect according to any one of the preceding aspects, the net structure exhibits a specific resistance to traction, along the stretched elements, that is greater than 20 KN/m, the specific resistance to traction being measured with the method set out in the description.

In a 41 st aspect, according to any one of the preceding aspects, the net structure exhibits a specific resistance to traction, along the stretched elements, that is comprised between 20 and 200KN/m, the specific resistance to traction being measured with the method set out in the description.

In a 42nd aspect, according to any one of the preceding aspects, the net structure exhibits a specific resistance to traction, along the stretched elements, that is comprised between 60 and 200KN/m, the specific resistance to traction being measured with the method set out in the description.

In a 43rd aspect, according to any one of the preceding aspects, the first and second elements are substantially perpendicular to one another.

In a 44th aspect, according to any one of the preceding aspects, the first and/or second elements are obtained by extrusion and subsequent stretching.

In a 45th aspect, according to any one of the preceding aspects, the first and second elements exhibit a full transversal section.

In a 46th aspect, according to any one of the preceding aspects, the first and second elements exhibit a substantially wire shape.

A 47th aspect relates to a process for realising a product according to any one of the preceding aspects, comprising steps of: continuously forming a plurality of first elements spaced from one another and parallel to an advancement direction, continuously forming a plurality of second elements, spaced from one another and transversal to the advancement direction, connecting the first and second elements at join zones such as to form a monolithic net structure, and following the connecting, stretching the net structure along the extension of the second elements, and realising a specific stretching thereof per unit of length that is substantially uniform along the second elements.

In a 48th aspect according to the preceding aspect the specific stretching, at an intermediate transversal section between two consecutive join zones, is not greater than 10% with respect to the specific stretching of a transversal section of the second elements at the join zone.

In a 49th aspect according to aspects 47 or 48, the stretched second elements exhibit a variation of a degree of crystallinity, between an intermediate point located between two consecutive join zones and a point located at the join zones, of lower than 8%.

In a 50th aspect according to the preceding aspect, the stretched second elements exhibit a variation of a degree of crystallinity, between an intermediate point located between two consecutive join zones and a point located at the join zones, of lower than 5%.

In a 51 st aspect according to aspects 49 or 50, the stretched second elements exhibit a variation of a degree of crystallinity, between an intermediate point located between two consecutive join zones and a point located at the join zones, of lower than 3%.

In a 52nd aspect according to aspects from 49 or 51, the stretched second elements exhibit an ordered molecular structure and further exhibit, along a tract of the extension thereof comprising two or more consecutive join zones, a variation in degree of crystallinity that is lower than 8%.

In a 53rd aspect according to the preceding aspect, the stretched second elements exhibit an ordered molecular structure and further exhibit, along a tract of the extension thereof comprising two or more consecutive join zones, a variation in degree of crystallinity that is lower than 5%.

In a 54th aspect according to aspects 52 or 53, the stretched second elements exhibit an ordered molecular structure and further exhibit, along a tract of the extension thereof comprising two or more consecutive join zones, a variation in degree of crystallinity that is lower than 5%.

In a 55th aspect according to any aspect from 47 to 54, the step of connecting alternatively comprises:
a) creating a localised heating of the surface destined for contact between the first and the second elements, generating, at the join zones, a substantially superficial join between the first and the second elements; or
b) bringing at least one from among the first and second elements to a softening point and realising a surface cohesion without substantial copenetration with the material of the other element, or
c) realising a constraint defined by a small area of connection between the first and the second elements, or
d) combining the method described in point a) with the method described in point c), or
e) combining the method described in point b) with the technique of point c).

in a 56th aspect according to any one of the preceding aspects, the stretched second elements define a plurality of stretched second elements located one directly adjacently to another; each of the second elements of the plurality is formed by a polymer having a minimum variation in the degree of crystallinity: in practice the variation in the degree of crystallinity for each of the second elements of the plurality, between and intermediate point (4a) located between two consecutive join zones (5) and a point located at the join zone, is less than 8%, in particular less than 5%, still more in particular less than 3%; practically, for substantially all the second elements the variation in the degree of crystallinity follows the mentioned rule, such as to define a stretched net structure having a degree of crystallinity that is substantially uniform along the direction of the second elements.

A 57th aspect relates to use of a product, of a type according to any one of the preceding aspects, or obtained by means of a process of any one of the preceding aspects, for consolidation or reinforcement of natural or artificial terrains or structures.

### BRIEF DESCRIPTION OF THE DRAWINGS

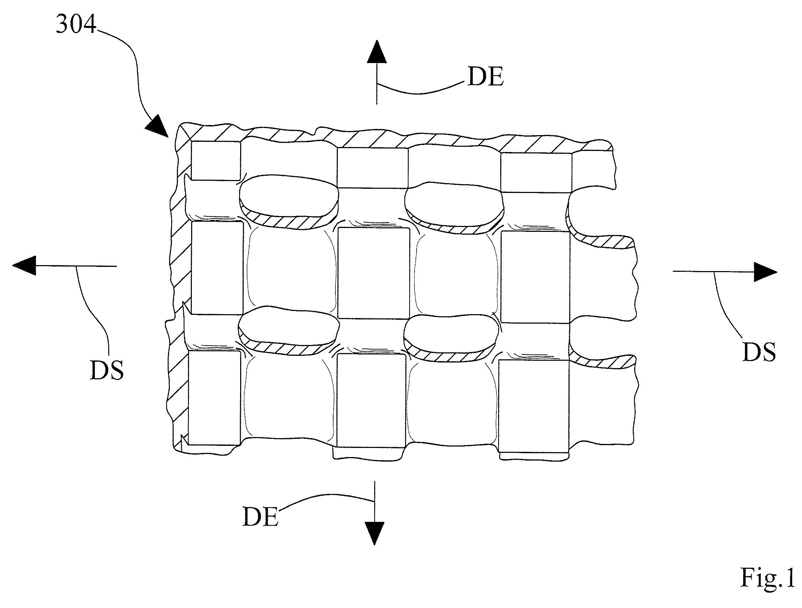

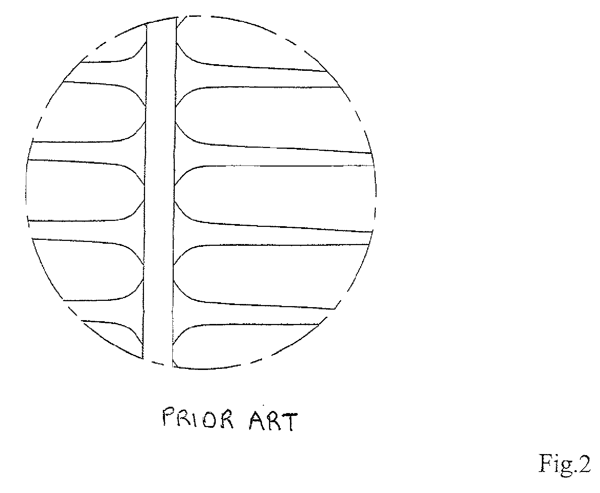

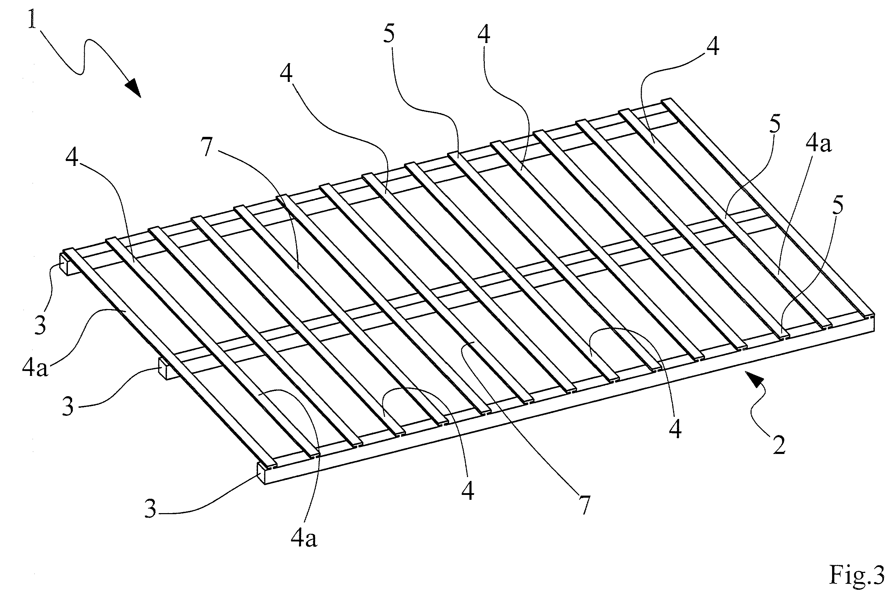

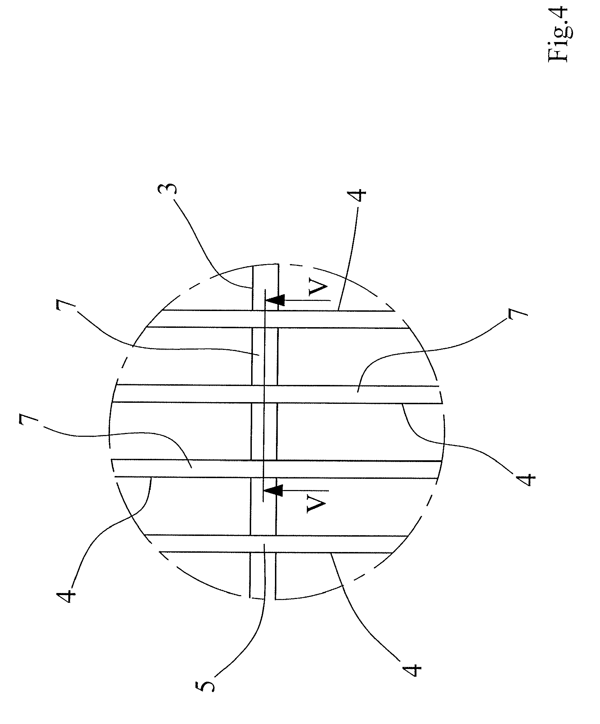

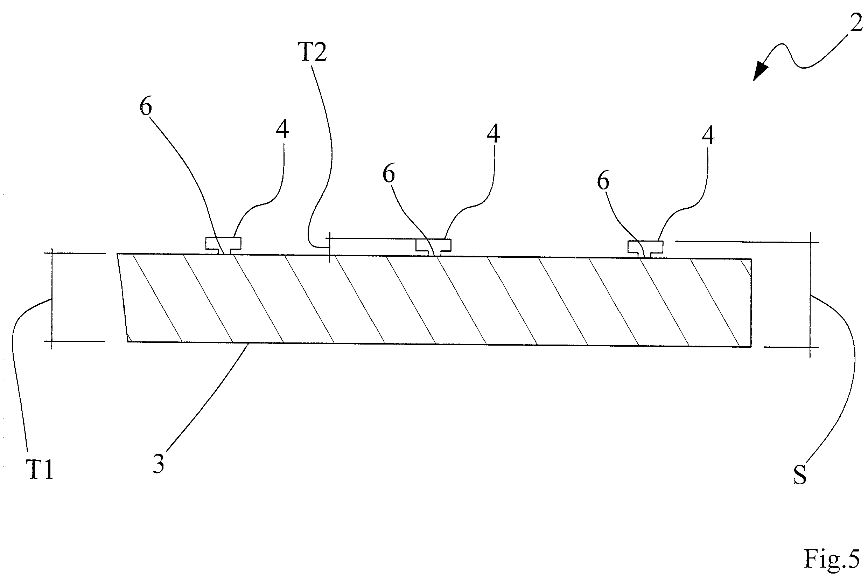

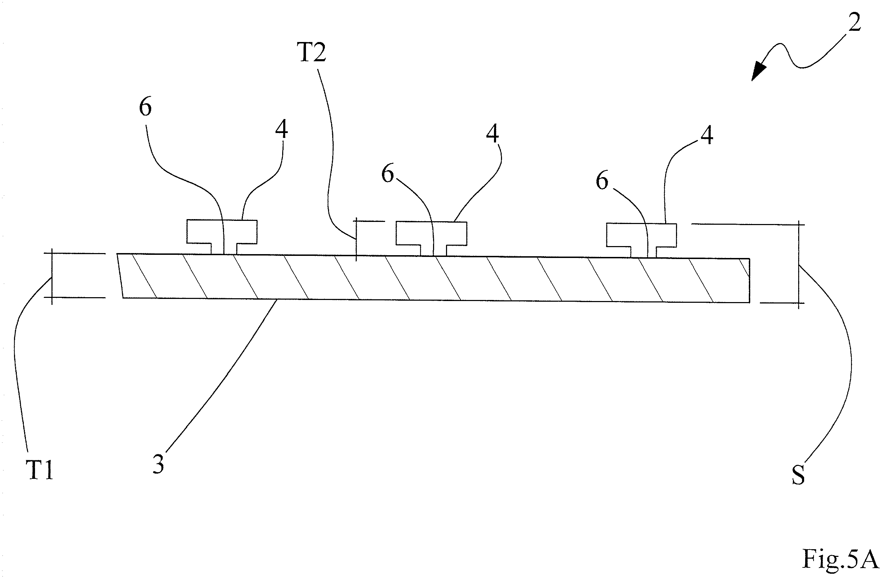

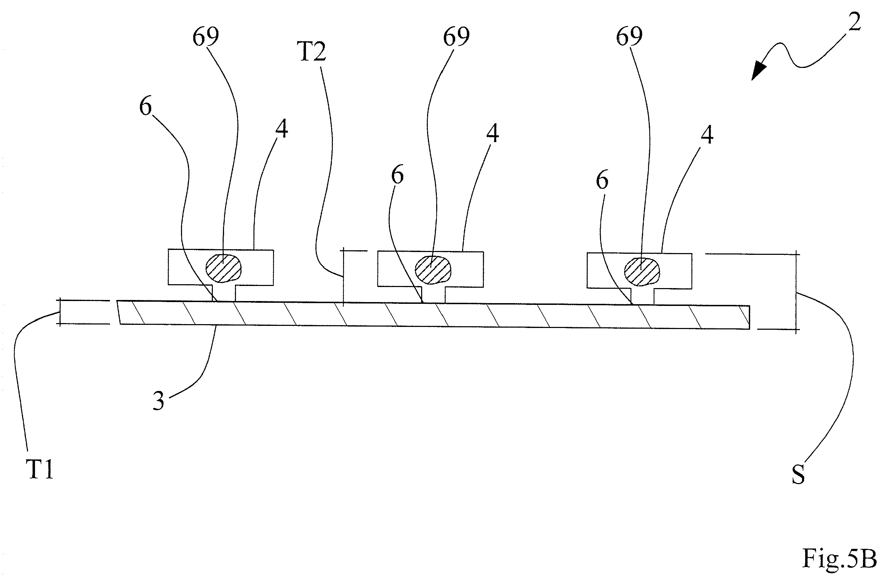

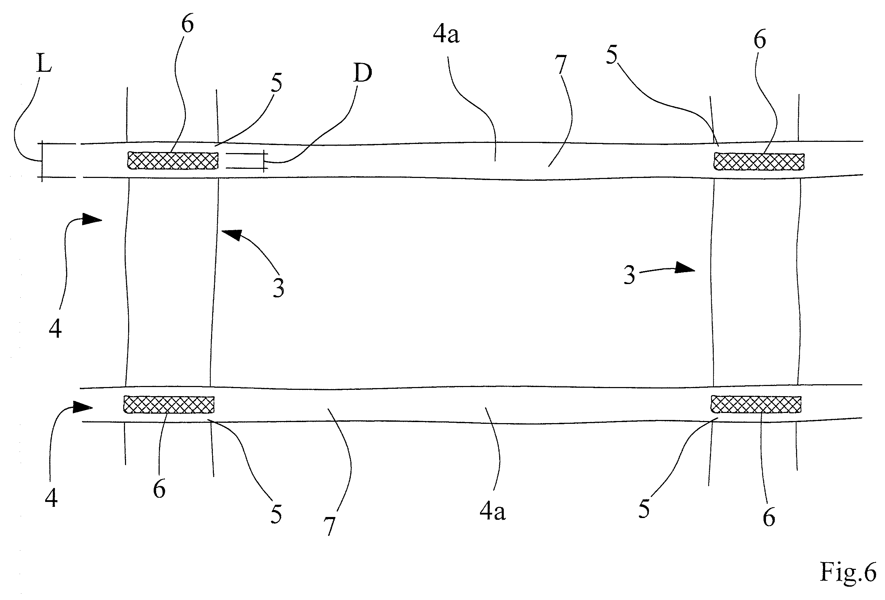

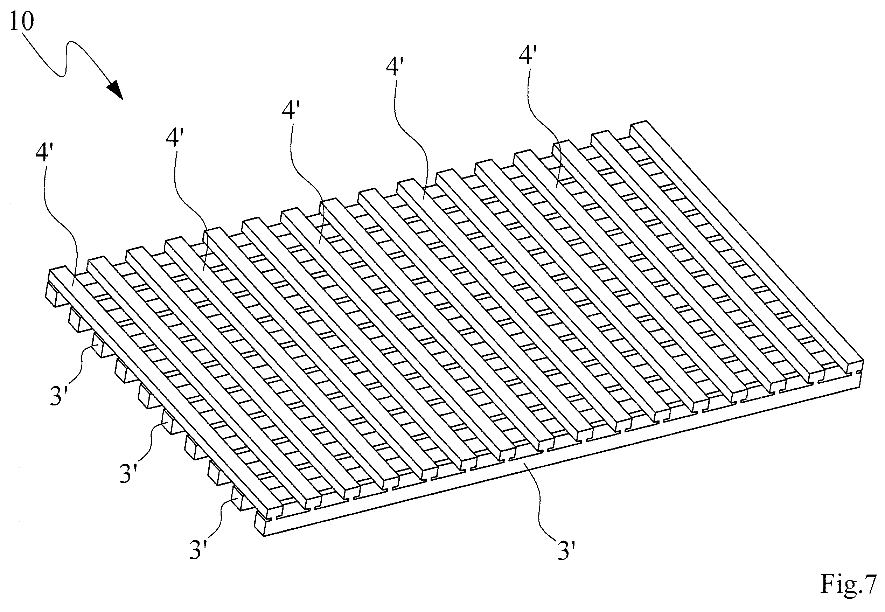

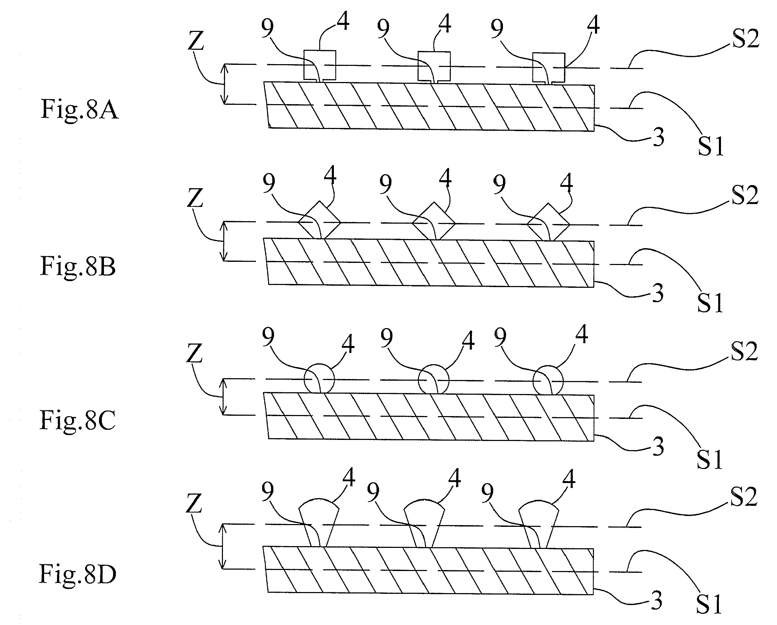

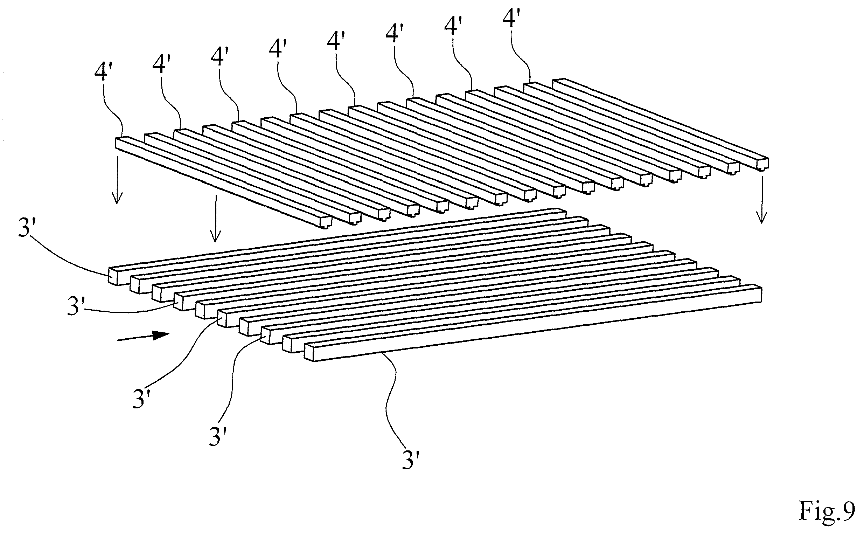

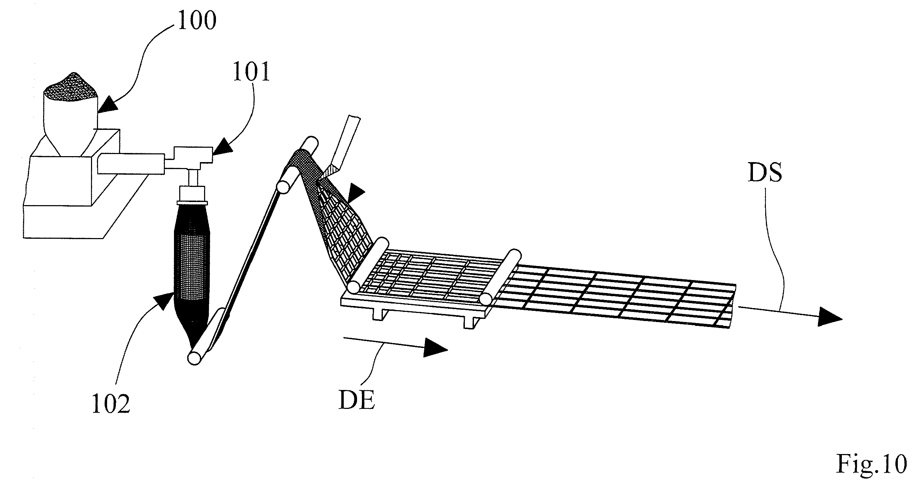

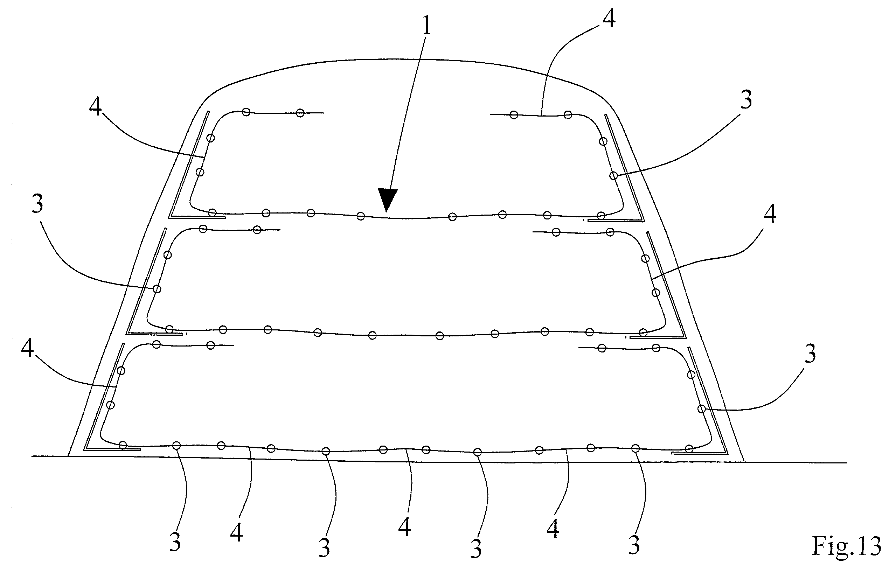

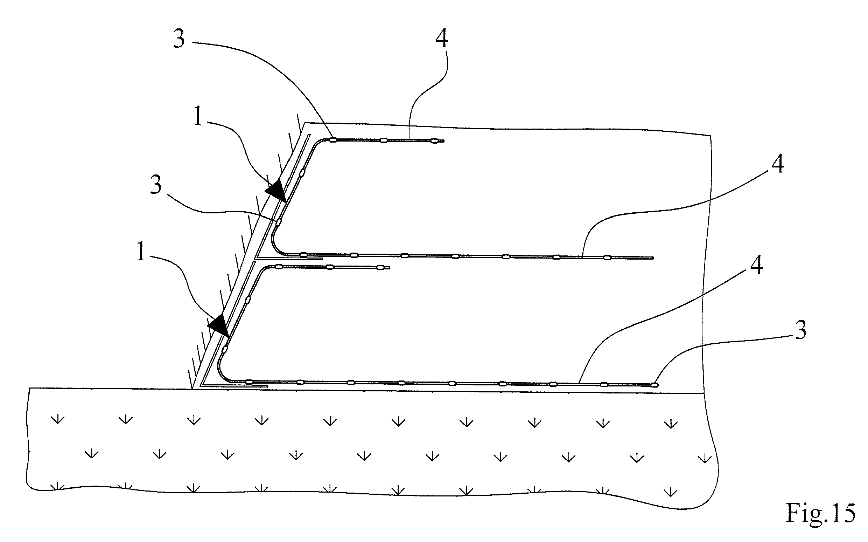

Some embodiments and aspects of the invention will be described in the following, with reference to the accompanying drawings, supplied only by way of non-limiting example, wherein:
➢ Figure 1 is a perspective view of a portion of a semi-finished workpiece for obtaining a net structure realised using a known method;
➢ Figure 2 is a detail of the semi-finished workpiece following a stretching action;
➢ Figure 3 is a perspective view of a portion of net product according to an aspect of the invention;
➢ Figure 4 is a detail of the product of figure 3;
➢ Figure 5 is an enlarged-scale section view along line V-V of figure 4;
➢ Figures 5A and 5B show enlarged alternative sections to the section of figure 5;
➢ Figure 6 is a view from above of a further detail of the product of figures from 3 to 5;
➢ Figure 7 is a perspective view of a semi-finished workpiece usable for example for obtaining the net product according to figures from 3 to 6;
➢ Figure 8A is a section view of the semi-finished workpiece of figure 7;
➢ Figures 8B, 8C and 8D are section views showing, in a non-limiting way, possible alternative embodiments to those of figures 7 and 8A;
➢ Figure 9 is a schematic view of a step of the production process for realising the semi-finished workpiece of figure 7;
➢ Figures 10, 11 and 12 show schematic views of possible production processes of the product according to figures from 3 to 7, according to an alternative embodiment of the invention; and
➢ Figures 13-15 show possible uses of the product according to figures from 3 to 7.

### DETAILED DESCRIPTION

With reference to the accompanying figures, 1 denotes in its entirety a reinforcing product for geotechnical applications, such as for the consolidation and/or reinforcement of natural slopes, green walls, block walls, artificial walls, coverings of rock embankments, or steadying landslides. As an example, figures 13-15 show some examples of use of the product 1, as will be described in the following.

The product 1 comprises a net structure 2 which in turn comprises a series of first elements 3 placed longitudinally and parallel to each other; the first elements 3 are spaced apart and interconnected by a plurality of second transversal elements 4, also for example parallel to one another.

The net structure 2 is a monolithic grid, i.e. in a single piece and not the result of connections by gluing or weaving of various elongate elements to one another; for example, the structure 2 made of plastic material can be realised using one or more of the following polymers: polyethylene, high density polyethylene (HDPE), polypropylene. In particular, it is possible to realize the first and the second elements 3, 4 with the same material or, alternatively, the second elements 4 can be made of different material to the first elements. A further variation on the material of construction can be to use, for the first and the second elements 3, 4, a combination of one or more of the materials listed above. In this case too it is possible to realize the first and second elements with the same combination of materials or, alternatively, differentiate between them in at least one of the component materials.

In the present description, each of the first elements 3 extends along the net structure 2 and is formed by a plurality of portions aligned along a same longitudinal line. Similarly, the second elements 4 extend in the width direction of the net structure 2 and are each formed by the plurality of portions aligned along a same transversal line. Each of the first elements 3 is intersected by a plurality of second elements 4 and each of the second elements 4 is intersected by a plurality of first elements 3 at the joint areas 5.

The net structure 2 is processed by stretching, non-limitingly, in the direction of the second elements 4 so as to obtain a monostretched net structure 2. Alternatively, the action of stretching can be done in two reciprocally-transversal directions, in particular in the directions of the first and second elements 3, 4 in order to obtain a bistretched net structure.

In the present description reference is non-limitingly made to a monostretched product 1 along the development of the second elements 4. The stretching process will be described in the following.

As shown in the accompanying figures, the first elements 3 and second elements 4 intersect at the join zones 5 to form a plurality of meshes. Quantitatively, the distance between two first adjacent elements 3 is between 100 mm and 400 mm, optionally between 200 mm and 300 mm. Similarly, the distance between adjacent second elements 4 is between 5 mm and 30 mm, optionally between 8 mm and 20 mm. The mesh size varies with the varying of the above distances, which meshes can exhibit an area of between 500 and 12000 mm2. In the figures it can be seen that the second elements 4 are placed transversally, for example perpendicularly, with respect to the first elements 3. Going into further detail, the size of the elements that make up the net structure 2 can be defined. In fact the first elements 3, in a section that is transversal to the prevalent direction of development thereof, have an area of greater than 20 mm², optionally greater than 30 mm².

The second elements 4, according to a section transversal to their prevalent direction of development, have an area of greater than 10 mm², optionally greater than 12 mm². The small size of the second elements 4 with respect to the first elements 3 is due to the stretching process from which the area of the cross section is reduced and the longitudinal elongation of the second elements is obtained.

As shown in figure 6, the first and second elements 3, 4, at the reciprocal join zones 5 between them, define a surface of mutual connection 6. This surface 6 exhibits an area which, in general, depends on the shape and size of the first and second elements 3, 4, as well as on the process of the coupling thereof.

With regard to the shape in particular of the cross section of the second elements, or their precursors present in the semifinished product 10 (visible in figure 7), this section can be achieved in such a way as to minimize the extension of the surface of mutual connection 6: examples are illustrated in figures 5, 5A and 5B which concern a finished product 1 as well as in figures 8A-8D, which relate to a semi-finished precursor of the product 1. The shape of the transversal section is designed also so as to enable maintaining, during a working condition of the product, a sufficient cohesion between the first and second elements 3, 4 which can therefore ensure structural integrity of the product 1.

Figure 5 non-limitingly illustrates an embodiment in which the first elements 3 have a square section, while the second elements 4 exhibit a substantially T-shaped section, capable of reducing the surface area of mutual connection 6 with the first elements 3. In fact, the second elements 4 are placed in contact with the first elements 3 at the bottom of the T-section thus having a reduced surface extension.

Alternatively, an embodiment not represented in the accompanying figures can include a net structure where the first or the second elements 3, 4 exhibit circular or elliptical transversal section. It should be noted in fact that the cylindrical or elliptical shape given to the section of at least one of the two elements can have a greatly reduced surface area of mutual connection 6.

More in detail, the relationship between the extension "D" of the surface of mutual connection 6 measured in a perpendicular direction to the development of the second elements 4 is less than 0.4, in particular less than 0.3, even more in particular less than 0.2, compared to the width "L" of the second elements 4, also measured along the same perpendicular direction: D/L <0.3

For example, with reference to first elements 3 having a section comprised between 12 mm and 8 mm and second elements 4 having a section comprised between 7 mm and 3 mm, the surface of mutual connection 6 at each join zone 5 is less than 40 mm², in particular less than 35 mm², more in particular less than 32 mm².

As shown in the accompanying figures, the second elements 4 have portions 7 extending between consecutive join zones 5: the portions 7 have a width, measured perpendicular to the respective developments, substantially constant from one join zone 5 to another immediately consecutive join zone 5. In practice, the width "L" and the transversal section of the second elements 4, also as a result of a marked action of board, remain substantially uniform and constant along the extension of the same second elements 4, differently from what happens in the known solution referred to figures 1 and 2.

The first and second elements 3, 4 can be suitably profiled and joined to one another so that, even in the case of a bi-stretched product, the transversal section of the first and second elements 3, 4 exhibit a substantially constant area between consecutive join zones 5, in particular along the whole development of each of the elements 4.

As previously mentioned, in the described preferred embodiment the first elements 3 are substantially not stretched (or at most slightly stretched), and thus exhibit a section and in particular a thickness that is larger than that of the second elements 4. Although the net structure 2 has two prevalent directions of development (i.e. the directions in which the first and second elements extend), the structure 2 also has a certain size, or overall thickness "S", perpendicular to the prevalent directions of development in order to give the product 1 a three-dimensional structure well-differentiated with respect to sheet materials. In figures 5, 5A and 5B the maximum thickness "S" of the net structure 2 can be seen, which is greater than 5, for example 8 or 12 mm. The thickness "S" is defined by the maximum distance between opposite sides of the net structure. Figures 5, 5A, 5B show the dimensional difference between the thickness of the first and second elements 3 and 4. Still more in detail, the first elements 3 have a size, or thickness, T1, greater than 3 mm, in particular greater than 5 mm, even more in particular more than 7 mm. The second elements 4 have a smaller thickness than the thickness T1 of the first elements 3, in particular have a thickness T2 greater than 2 mm, in particular greater than 3 mm, even more in particular greater than 5 mm.

Figures 5, 5A and 5B illustrate different embodiments of a product 1. In particular, figure 5 shows a preferred embodiment of the product 1 in which the first elements 3 have a thickness T1 greater than the thickness T2 of the second elements. With regard to the embodiment shown in figure 5A, it exhibits first elements 3 with a thickness T1 substantially equal to the thickness T2 of the second elements 4. Figure 5B shows a product 1 in which the first elements 3 have a thickness T1 of less than the thickness T2 of the second elements 4.

Even more in detail it is possible to relate the thickness of the first and second elements 3, 4 through the ratio between the thickness T1 of the first elements 3 and the thickness T2 of the second elements 4, which is greater than 2, in particular greater than 2.5 even more in particular greater than 3.

In relation to lie, and defining as the lie plane the plane that is perpendicular to the section plane of figures 5, 5A, 5B cutting the thickness T2 in half (for the second elements) respectively and the thickness T1 (for the first elements), it should be noted that the first elements 3 and the second elements 4 lie, at least at the join zones 5, on surfaces, for example flat, having different and spaced lie arrangements. By lie surface of the first elements 3 is intended the prevailing surface of development S1, for example flat, of the first elements passing through a central area of the thickness of the first elements at the join zones 5.

By lie plane of the second elements 4 is meant the prevailing surface of development S2, for example flat, of the second elements passing through a central area of the thickness of the second elements at the join zones 5: as can be seen in figures 8A to 8D, the surfaces S *1 and S2 are spaced a distance Z from one another. According to embodiments, the lie planes/lie surfaces of the first and second elements can either be, or not be, also spaced in the intermediate tracts to consecutive join zones.

The elongate shape of the second elements 4 gives the reinforcing element excellent flexional capacity, in particular enabling the structure 2 to flex freely according to at least a transversal axis substantially parallel to the first elements 3.

The second elements 4 also guarantee excellent resistance to traction. The stretching ratio or the ratio between the length of the second elements 4 after stretching and the length of the second elements 4 before stretching is at least 3, optionally between 3 and 10, more optionally between 4 and 8. Note that it is possible to slightly stretch the first elements 3 (such as a stretching resulting in a stretching ratio of not more than 1.25).

The product 1 thus obtained, which as mentioned is made of plastic material, has a specific weight of from 200 to 1200 g per m² and a specific resistance to traction, along the second elements, of greater than 20 KN/m, in particular between 20 and 200 KN/m, optionally between 60 and 200 KN/m. The specific resistance is measured by the method described in EN ISO 10319.

Without wishing to be limited by theoretical explanation, the stretching process of the second elements 4 can arrange the polymer chains in an orientation that is markedly directed along the prevailing direction of development of the second elements (which is also true for the first elements in a bistretched net structure).

Microscopically the plastic material forming the net structure 2 comprises a complex of polymer chains. The alignment of these polymer chains along a direction, following stretching, enables increasing the tensile strength along the said direction. The alignment of the polymer chains enables a molecular rearrangement, and therefore an increase of the degree of crystallinity of the polymer.

### Degree of crystallinity

The degree of crystallinity of a sample of material defines a factor indicating the percentage or fraction of material which is in the crystalline state with respect to the total amount: depending on the way the amount of material is expressed, a more precise reference to degree of crystallinity is "mass" (κm) or "volume" (κv). In the following we will refer to the degree of crystallinity by mass; for the measurement of the degree of crystallinity the following measuring method will be used: Mettler Toledo DSC analysis tool, with accuracy for the temperature of ± 0.2K and precision of ± 0.02K . The method of analysis comprised a heating of 10mg samples from 25°C to 180°C (for HDPE) or from 25°C to 230°C (for PP) with a ramp of 10°C/min, followed by cooling at the same gradient and a subsequent heating with the same derivative. These last two operations were performed to verify that the analysis was carried out properly. The 10mg samples are taken from the elements (for example the first and/or second elements) at the transversal section where the measure of the degree of crystallinity is required.

Note also that for the purpose of measuring the values of the degree of crystallinity referred to in this description and the claims, the material samples must be collected at a central area of each transversal section of the element, in order to prevent boundary conditions from having an influence; this central area is shown in dashed lines, and denoted by 69 in figure 5B, and is substantially localised internally of the boundaries of the transversal section where the sample is to be taken, at a position from the edge that is substantially half the thickness of the transversal section of interest. For example, in the case of elements 3 and 4 having a solid transversal section, symmetrical with respect to one or more axes of symmetry (for example circular, rectangular or square) the sampling point is placed on or over the centre of symmetry.

DSC analysis is obtained from the enthalpy related to the step of fusion of the sample under testing: this value compared to the value of enthalpy of fusion of an HDPE (or PP) obtained in the laboratory at 100% crystalline (values in the literature) gives the percentage of crystallinity of the sample.

In general, the degree of crystallinity does not depend exclusively on the material but also depends on the manufacturing process by which a product has been obtained, the shape of the product and any processing performed thereon.

The degree of crystallinity is a factor that ranges from 0 to 1 (alternatively expressed as a percentage from 0% to 100%) where 0 identifies an amorphous structure (polymer chains arranged in a disorderly fashion) while 1 identifies a fully crystalline structure (polymer chains or groups of polymer chains that are completely aligned). To provide some technical data of example, in plastics the degree of crystallinity varies typically from 20 to 80%.

In the case of the product 1 the mean degree of crystallinity of the polymer forming the stretched elements (the second elements 4) can be defined as the average value from among a plurality of degrees of crystallinity presented by the polymer at different cross sections along the second elements; thanks to the stretching action the mean degree of crystallinity is greater than 55%, in particular greater than 60%, even more in particular greater than 63%.

In more detail, the second stretched elements 4 exhibit a variation of the degree of crystallinity in the polymer forming them of between an intermediate point 4a between two consecutive zones 5 and a point at said join zone 5, of less than 8%, in particular less than 5%, even more in particular less than 3%.

In still more detail, the material of the second elements 4 has, along a portion of the development thereof comprising two or more join areas in succession, a variation in the degree of crystallinity of lower than 8%, in particular less than 5%, even more in particular less than 3%.

### PRODUCTION OF THE REINFORCING PRODUCT

The product 1 comprises a net structure 2 made of plastic material (such as HDPE or polypropylene) from which the first and the above-described second elements 3, 4 are non-limitingly fashioned by extrusion.

The formation of the first and second elements 3, 4 can take place separately via distinct formation processes, e.g. extrusion, or alternatively the first and second elements 3, 4 can be extruded simultaneously via a coextrusion process.

In the case of a separate extrusion the extrusion of first elements 3' is first done, followed by the depositing of separately-extruded second elements 4' on said first elements 3', for the formation of the net structure 2 (figure 9).

As regards instead the variant utilizing the coextrusion process, represented schematically in figure 10, the plastic material is fed from a hopper 100 and then moved towards an extrusion head 101. At the extrusion head, the first elements 3' (or precursors thereof) are extruded elements and the precursors of the second elements 4' are coextruded transversally to the first elements, forming an integral net and tubular body 102 in output from the extrusion head.

In both cases (separate extrusion or coextrusion) a monolithic plastic body results.

The joining of the first and second elements can be done in the following ways:
a) in a first variant there can be a localised heating of the surface destined for contact between the first and second elements (for example with ultrasound technology) such that at the join zones 5 there is a substantially superficial join (therefore with a copenetration and mixing of the polymer materials forming the elements limited to a few tenths of mm, for example less than 5 tenths of mm) between first and second elements such as to ensure a joint there-between without however causing an excessive constraint to sliding of the material during the following stretching operations of the second elements.
b) In a second variant, a localised surface join can be obtained by bringing at least one from the first and second elements to a softening temperature of the material, i.e. the point at which the material starts passing from the solid to the liquid state, without however losing its geometry: in this state the material of an element is able to realise a surface cohesion without substantial copenetration with the material of the other element and therefore, once more, without causing an excessive constraint to sliding of the material in the following stretching operation of the second elements.
c) In a third variant (see figures 8A-8B-8C showing a cross section of various configurations that the net structure 2 can be given), constraint defined by a reduced area of connection between the first and second elements 3, 4 is provided, defined by a small connecting area between the first and second elements 3, 4, differently to what happened in the semi-finished piece obtained with the known methods of figure 1 and figure 2. As can be noted, in the case of the semifinished pieces illustrated in figures 7, 8A, 8B and 8C the material of the second elements is connected to the material of the first elements in limited areas that while ensuring an adequate join, do not compromise a uniform stretching of the second elements.
d) A further variant can combine the method of point a) with that of point c).
e) A further variant can combine the method of point b) with the method of point c).

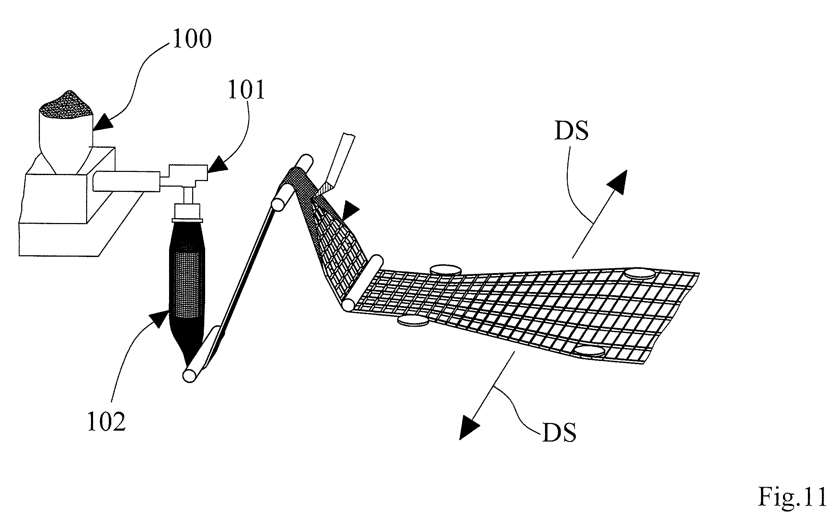

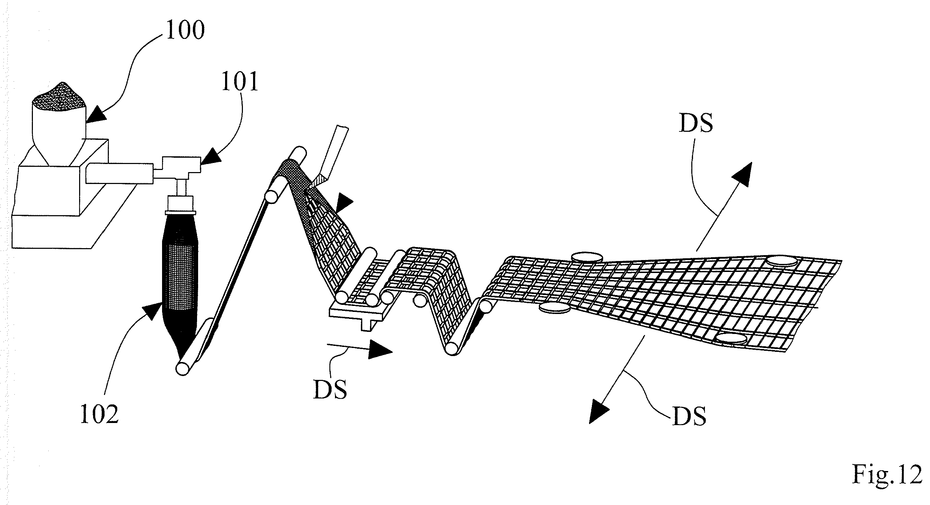

Continuing in the description of the methods according to the invention, following the formation of the monolithic net structure 2, the product 1 undergoes a process of stretching, non-limitingly, along the extension of the second elements 4 (figure 11). Alternatively it is possible to stretch the net structure 2 along the development of the first elements (figure 10) or stretch the net structure both in the direction of the first elements 3 and in the direction of the second elements 4 (figure 12).

It should be noted that in the case of a product obtained by co-extrusion the first elements 3 are parallel to the output direction from the extrusion station DE and the stretching of the second elements 4 occurs in a direction DS transversal to the extrusion direction (stretching process schematically illustrated in the figures). In this way high-performance second elements 4 are obtained, as well as first elements of arbitrary length, since the extruder can provide lengths that are at first indefinite. Alternatively a monostretched product can be obtained by stretching along direction DE.

By applying opposite stretching forces of equal intensity, the first elements 3 distance uniformly and are parallel and aligned, and therefore without curvature or inclinations which would compromise the correct use thereof.

As previously described, the stretching enables increasing the orientation of the polymer chains along the stretching direction. The aligning of the polymer chains is defined by the degree by crystallinity, as described herein above.

In greater detail, the stretching action enables a specific lengthening to be obtained per unit of length (i.e. the lengthening obtained following the stretching action and defined as a final length minus the initial length divided by the initial length) that is substantially uniform along the second elements 4. In particular, the specific elongation, at an intermediate transversal section between two consecutive join areas, is not more than 10% with respect to the specific elongation of the second elements 4 at the areas 5.

More in detail, the stretching action can confer on the material forming the product an average degree of crystallinity of greater than 55%, in particular greater than 60%, even more in particular greater than 63%.

In greater detail, the stretching action can confer on the second elements 4 a high uniformity of crystallization: in more detail the second stretched elements exhibit a variation of the degree of crystallinity in the polymer forming them, between an intermediate point 4a between two consecutive zones 5 and a point at the join area, of less than 8%, in particular less than 5%, even more in particular less than 3%.

In still greater detail, the stretching action enables substantially maintaining uniform the degree of the crystallinity of the product 1 along a tract of each of the second elements comprising at least two consecutive join zones, in particular along the whole development of the second elements. The product 1 thus formed has an ordered molecular structure and also exhibits, along a portion of the development thereof comprising two or more consecutive zones 5, a variation in the degree of crystallinity of less than 8%, in particular less than 5%, even more in particular less than 3%.

The stretching can be carried out by bringing at least one from the first and second elements to a stretching temperature which can be different, on the basis of the material used for realising the product 1.

For example if the product is made of PP, the stretching temperature is higher than 80°C, in particular between 80 and 140°C, still more in particular between 90 and 130°C.

If the product is made of HDPE, the stretching temperature is higher than 80°C, in particular between 80 and 130°C, still more particularly between 90 and 120°C.

The net structure is brought to the stretching temperature by a process of heating by convection of hot air or hot water bath or by means of other heating systems.

The net structure is then cut transversally to the first elements to a predetermined length, measured in the direction of the first elements or the longitudinal elements. The measurement of this length is typically greater and depends on the destined application; however, it is possible to have lengths of the first elements to 10, 50 or even 100 metres. The measurement of the width is also dependent on the application; however, it can have a width of up to 2, 4 or even 8 metres.

Lastly, the net structure can be formed into rolls along a transversal winding axis, for example perpendicular to the prevailing direction of development of the first elements, such to form a product roll that is easier to transport. Note that the roll-winding can take place even before the transversal cutting: in other words a winding station can be provided downstream of the stretching process, and the net structure can be wound there; once a product in a predetermined roll size has been obtained, the net structure can be cut transversally to the prevailing direction of development of the first elements, and then the formation of a new product roll can be begun.

### USE OF THE REINFORCING PRODUCT

The product 1 is used for the reinforcement and/or consolidation of the soil, in particular usable for creation of slopes, barriers and walls or green blocks, containing structures and/or the like.

From an operational point of view the product 1 can be applied to terrains in need of consolidation, slopes or cliffs susceptible to landslide to provide support to the free surface of the terrain.

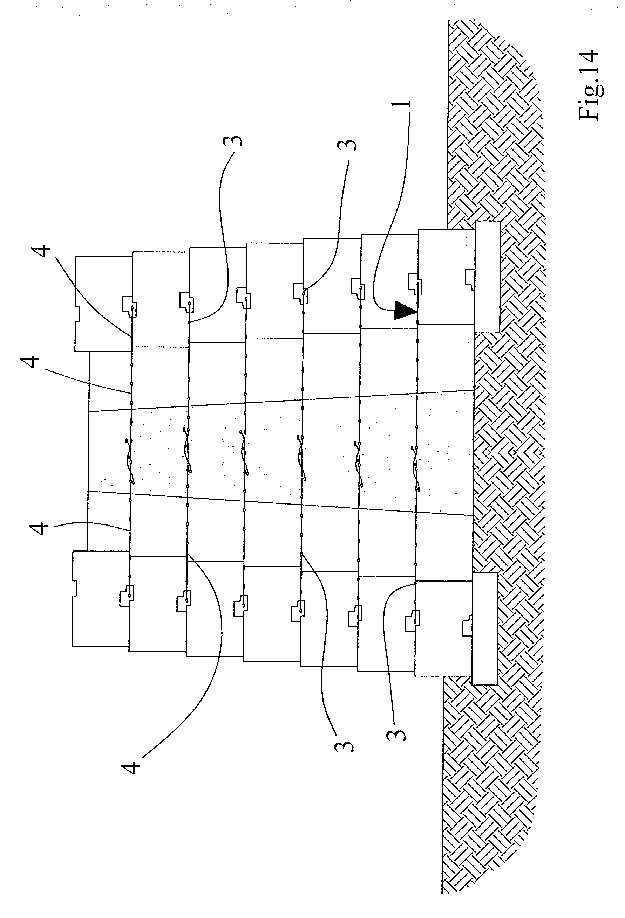

For example, as shown in figure 14, the product 1 can be applied to a front of a slope, substantially to a surface region thereof in order to provide a surface consolidation and a containment against the separation of portions of terrain.

The product 1 also offers the possibility of sowing and growth of grass and the like thanks to the considerable free area between the elongated elements.

In addition, or alternatively to the above, the product 1 can be inserted in the matrix of the terrain or walls to be consolidated, in order to strengthen the structure thereof and to better support and redistribute the loads (figures 12 and 13).

In use (both at the surface and inside the ground) the product can be folded back on itself one or more times, to define a multilayer structure, and applied to the soil to be consolidated, or a plurality of products can be applied in mutual overlap to form a multilayer structure for the consolidation of terrains. The elongated elements of different portions of the same product or different products can be placed parallel or transversal to one another.

## Claims

1. A reinforcing product (1) for geotechnical applications, having a net structure (2) made of a plastic material, comprising:
a plurality of first elements (3), distanced from one another,
a plurality of second elements (4), distanced from one another, which develop substantially in a transversal direction to the first elements (3) and are connected to the first elements (3) at a plurality of join zones (5) in order to form a plurality of meshes of the net structure (2),
wherein at least the second elements (4), subsequent to formation and connection thereof with the first elements (3), are stretched along an extension thereof and exhibit a structure having molecular chains oriented along the stretching direction, said stretched second elements (4) exhibiting, along an extension thereof, a degree of polymer crystallinity,
**characterized in that** the second stretched elements (4) exhibit a polymer material having a variation in degree of crystallinity, between an intermediate point (4a) located between two consecutive join zones (5) and a point located at the join zone, of less than 8%, in particular less than 5%, still more in particular less than 3%,
wherein the second elements (4) are formed of a stretched plastic material having, along a tract of extension of the second elements (4) comprising more than two consecutive join zones (5), a change in degree of crystallinity that is less than 8%, in particular less than 5%, still more in particular less than 3%.

2. The product of claim 1, wherein the mean degree of crystallinity of the polymer forming the second elements (4) is greater than 55%, in particular greater than 60%, still more in particular greater than 63%, the mean degree of crystallinity of the polymer forming the second elements (4) is greater than a mean degree of crystallinity of the polymer forming the first elements (3).

3. The product of any one of the preceding claims, wherein the stretched elements exhibit a width, measured transversally thereto, that is substantially constant along the respective extension, and wherein the second elements (4) exhibit, along the respective extension, a transversal direction having a substantially constant area.

4. The product of any one of the preceding claims, wherein the first elements (3) lie, at least at the join zones (5), on a prevalent extension surface (S1), for example flat, of the first elements and passing through a central zone of the thickness of the first elements (3) at the join zones (5), the second elements (4) lying on a prevalent extension surface (S2), for example flat, of the second elements and passing through a central zone of the thickness of the second elements at the join zone (5), the prevalent extension surface (S1) of the first elements (3) being different from the surface of the prevalent extension (S2) of the second elements (4), the net structure (2) being substantially a three-dimensional structure defined by the superposing of the first and second elements (3, 4).

5. The product of any one of the preceding claims, wherein the first and the second elements (3, 4), at the join zone (5), define a surface of mutual connection (6), and wherein the ratio between the extension (D) of the surface of mutual connection (6) in a perpendicular direction to the stretching direction is less than 0.4, in particular less than 0.3, still more in particular less than 0.2, with respect to the width (L) of the second elements (4), also measured along the perpendicular direction.

6. The product of any one of the preceding claims, wherein the second elements (4) exhibit a stretching ratio, defined as a ratio between a final length of the second elements (4) once stretched and an initial length of the second elements (4) before the stretching action that is greater than 3, optionally comprised between 3 and 10, more optionally between 4 and 8.

7. The product of any one of the preceding claims, wherein the stretched second elements (4) exhibit a specific stretching, at an intermediate transversal section between two consecutive join zones (5), which is not greater than 10% with respect to a specific stretching of a transversal section of the stretched second elements (10) in the join zone (5).

8. The product of any one of the preceding claims, wherein the first elements (3) exhibit a stretch ratio, defined as a ratio between a final length of the first elements (3) once stretched and an initial length of the first elements (3) before the stretching action that is lower than the stretching ratio of the second elements (4), in particular comprised between 1 and 1.5, optionally wherein the first elements (3) are not subjected to the stretching action.

9. The product of any one of the preceding claims, wherein the product includes a plurality of said stretched second elements (4), positioned the one directly adjacent to the other, each one of said second elements of said plurality being formed in a polymer having a variation of the degree of crystallinity, between an intermediate point (4a) located between two consecutive join zones (5) and a point located at the join zone, of less than 8%, in particular less than 5%, still more in particular less than 3%, such as to define a stretched net structure having a substantially uniform crystallinity degree along the second elements.

10. The product of any one of the preceding claims, wherein the first elements (3) exhibit a transversal section having an area of greater than 20 mm², optionally greater than 30 mm²,
wherein the second elements (4) exhibit a transversal section having an area greater than 10 mm², optionally greater than 12 mm², in particular wherein the first elements (3) exhibit a transversal section that greater by at least twice, in particular by greater than 2.5 times, than the transversal section of the second elements (4), and wherein the net structure (2) exhibits a specific weight that is greater than 200 g per m², optionally between 400 and 1200 g per m²,
wherein the net structure (2) exhibits a specific resistance to traction, along the stretched elements, that is greater than 20 KN/m, in particular comprised between 20 and 200 KN/m, optionally between 60 and 200 KN/m, the specific resistance to traction being measured with the method set out in the description, and
wherein the first and/or the second elements (3, 4) are obtained by extrusion and subsequent stretching and wherein the first elements (3) and the second elements (4) comprise at least a material selected from among a group comprising: HDPE, PP.

11. A process for manufacturing a product as in any one of the preceding claims, comprising steps of:
continuously forming a plurality of first elements (3') spaced from one another and parallel to an advancement direction,
continuously forming a plurality of second (4') elements, spaced from one another and transversal to the advancement direction,
connecting the first and second elements (3', 4') at join zones (5) such as to form a monolithic net structure (2), and
following the connecting, stretching the net structure (2) along the extension of the second elements, and realising a specific stretching thereof per unit of length that is substantially uniform along the second elements.

12. The process of the preceding claim, wherein the specific stretching, at an intermediate transversal section between two consecutive join zones (5), is not greater than 10% with respect to the specific stretching of a transversal section of the second elements (4) at the join zone (5), wherein the stretched second elements (4) exhibit a variation of a degree of crystallinity, between an intermediate point (4a) located between two consecutive join zones (5) and a point located at the join zones (5), of lower than 8%, in particular lower than 5%, still more in particular lower than 3%, and wherein the stretched second elements (4) exhibit an ordered molecular structure and further exhibit, along a tract of the extension thereof comprising two or more consecutive join zones (5), a variation in degree of crystallinity that is lower than 8%, in particular lower than 5%, still more in particular lower than 3%.

13. The process of claim 11 or 12, wherein the step of connecting alternatively comprises:
a) creating a localised heating of the surface destined for contact between the first and the second elements (3, 4), generating, at the join zones, a substantially superficial join between the first and the second elements (3, 4); or
b) bringing at least one from among the first and second elements (3, 4) to a softening point and realising a surface cohesion without substantial copenetration with the material of the other element, or
c) realising a constraint defined by a small area of connection between the first and the second elements (3, 4), or
d) combining the method described in point a) with the method described in point c), or
e) combining the method described in point b) with the technique of point c

14. Use of a product, of a type according to any one of claims from 1 to 10, or obtained by means of a process of any one of claims from 11 to 13, for consolidation or reinforcement of natural or artificial terrains or structures.

## Patentansprüche

1. Verstärkungsprodukt (1) für geotechnische Anwendungen, das eine Netzstruktur (2) besitzt, die aus einem Kunststoffmaterial gefertigt ist, umfassend:
eine Vielzahl von voneinander entfernten ersten Elementen (3),
eine Vielzahl von voneinander entfernten zweiten Elementen (4), die sich im Wesentlichen in einer transversalen Richtung zu den ersten Elementen (3) erstrecken und mit den ersten Elementen (3) in einer Vielzahl von Verbindungsbereichen (5) gekoppelt sind, um eine Vielzahl von Maschen der Netzstruktur (2) zu bilden,
wobei mindestens die zweiten Elemente (4), nach deren Bildung und Koppelung mit den ersten Elementen (3), entlang einer Ausdehnung derer gestreckt werden und eine Struktur aufweisen, die Molekülketten besitzt, die entlang der Streckungsrichtung orientiert sind, wobei die gestreckten zweiten Elemente (4) entlang einer Ausdehnung derer einen Grad an Polymerkristallinität aufweisen,
**dadurch gekennzeichnet, dass** die zweiten gestreckten Elemente (4) ein Polymermaterial aufweisen, das eine Variation im Grad der Kristallinität zwischen einem Zwischenpunkt (4a), der sich zwischen zwei aufeinanderfolgenden Verbindungsbereichen (5) befindet, und einem Punkt, der sich im Verbindungsbereich befindet, von weniger als 8%, insbesondere weniger als 5%, weiter insbesondere weniger als 3%, besitzt,
wobei die zweiten Elemente (4) aus einem gestreckten Kunststoffmaterial gebildet sind, das entlang eines Streckungsabschnitts der zweiten Elemente (4), der mehr als zwei aufeinanderfolgende Verbindungsbereiche (5) umfasst, eine Veränderung im Grad der Kristallinität besitzt, die weniger als 8%, insbesondere weniger als 5%, weiter insbesondere weniger als 3%, beträgt.

2. Produkt nach Anspruch 1, wobei der mittlere Grad der Kristallinität des Polymers, das die zweiten Elemente (4) bildet, größer als 55%, insbesondere größer als 60%, weiter insbesondere größer als 63%, ist, und der mittlere Grad der Kristallinität des Polymers, das die zweiten Elemente (4) bildet, größer als der mittlere Grad der Kristallinität des Polymers ist, das die ersten Elemente (3) bildet.

3. Produkt nach einem der vorhergehenden Ansprüche, wobei die gestreckten Elemente eine Breite aufweisen, gemessen transversal dazu, die entlang der jeweiligen Ausdehnung im Wesentlichen konstant ist, und wobei die zweiten Elemente (4) eine Transversalrichtung aufweisen, entlang der jeweiligen Ausdehnung, die im Wesentlichen eine konstante Fläche besitzt.

4. Produkt nach einem der vorhergehenden Ansprüche, wobei die ersten Elemente (3) mindestens in den Verbindungsbereichen (5) auf einer vorherrschenden Ausdehnungsoberfläche (S1), beispielsweise flach, der ersten Elemente liegen und durch einen zentralen Bereich der Dicke der ersten Elemente (3) in den Verbindungsbereichen (5) hindurchgehen, wobei die zweiten Elemente (4) auf einer vorherrschenden Ausdehnungsoberfläche (S2), beispielsweise flach, der zweiten Elemente liegen und durch einen zentralen Bereich der Dicke der zweiten Elemente in den Verbindungsbereichen (5) hindurchgehen, wobei die vorherrschende Ausdehnungsoberfläche (S1) der ersten Elemente (3) sich von der vorherrschenden Ausdehnungsoberfläche (S2) der zweiten Elemente (4) unterscheidet, wobei die Netzstruktur (2) im Wesentlichen eine dreidimensionale Struktur ist, die durch die Überlagerung der ersten und zweiten Elemente (3, 4) definiert ist.

5. Produkt nach einem der vorhergehenden Ansprüche, wobei die ersten und die zweiten Elemente (3, 4) im Verbindungsbereich eine Oberfläche gegenseitiger Kopplung (6) definieren, und wobei das Verhältnis zwischen der Ausdehnung (D) der Oberfläche gegenseitiger Kopplung (6) in einer Querrichtung zur Streckungsrichtung weniger als 0.4, insbesondere weniger als 0.3, weiter insbesondere weniger als 0.2, in Bezug auf die Breite (L) der zweiten Elemente (4), ebenfalls in der Querrichtung gemessen, beträgt.

6. Produkt nach einem der vorhergehenden Ansprüche, wobei die zweiten Elemente (4) ein Streckverhältnis aufweisen, definiert als Verhältnis zwischen einer Endlänge der zweiten Elemente (4) nach der Streckung und einer Anfangslänge der zweiten Elemente (4) vor dem Streckungsvorgang, das größer als 3, wahlweise zwischen 3 und 10, weiter wahlweise zwischen 4 und 8, beträgt.

7. Produkt nach einem der vorhergehenden Ansprüche, wobei die gestreckten zweiten Elemente (4) eine spezifische Streckung auf einer transversalen Zwischensektion zwischen zwei aufeinanderfolgenden Verbindungsbereichen (5) aufweisen, die nicht größer als 10% in Bezug auf eine spezifische Streckung einer transversalen Sektion der gestreckten zweiten Elemente (10) im Verbindungsbereich (5) ist.

8. Produkt nach einem der vorhergehenden Ansprüche, wobei die ersten Elemente (3) ein Streckverhältnis aufweisen, definiert als Verhältnis zwischen einer Endlänge der ersten Elemente (3) nach der Streckung und einer Anfangslänge der ersten Elemente (3) vor dem Streckungsvorgang, das weniger als das Streckverhältnis der zweiten Elemente (4), insbesondere zwischen 1 und 1.5, ist, wahlweise wobei die ersten Elemente (3) nicht dem Streckvorgang ausgesetzt sind.

9. Produkt nach einem der vorhergehenden Ansprüche, wobei das Produkt eine Vielzahl von den gestreckten zweiten Elementen (4) beinhaltet, wobei eines direkt benachbart an das nächste positioniert ist, wobei jedes der zweiten Elemente der Vielzahl aus einem Polymer gebildet ist, der eine Variation im Grad der Kristallinität besitzt, zwischen einem Zwischenpunkt (4a), der sich zwischen zwei aufeinanderfolgenden Verbindungsbereichen (5) befindet, und einem Punkt, der sich im Verbindungsbereich befindet, die weniger als 8%, insbesondere weniger als 5%, weiter insbesondere weniger als 3% ist, sodass eine gestreckte Netzstruktur definiert wird, die im Wesentlichen einen einheitlichen Grad an Kristallinität entlang der zweiten Elemente besitzt.

10. Produkt nach einem der vorhergehenden Ansprüche, wobei die ersten Elemente (3) eine Transversalsektion aufweisen, die eine Fläche von größer als 20 mm², wahlweise größer als 30 mm², besitzt,
wobei die zweiten Elemente (4) eine Transversalsektion aufweisen, die eine Fläche größer als 10 mm², wahlweise größer als 12 mm², insbesondere wobei die ersten Elemente (3) eine Transversalsektion aufweisen die mindestens doppelt so groß, insbesondere 2.5 mal größer, als die Transversalsektion der zweiten Elemente (4) ist, und wobei die Netzstruktur (2) ein spezifisches Gewicht aufweist, das größer als 200 g pro m², wahlweise zwischen 400 und 1200 g pro m², ist,
wobei die Netzstruktur (2) einen spezifischen Zugwiderstand entlang der gestreckten Elemente aufweist, der größer als 20 KN/m, insbesondere zwischen 20 und 200 KN/m, wahlweise zwischen 60 und 200 KN/m, ist, wobei der spezifische Zugwiderstand nach der Methode, die in der Beschreibung aufgeführt ist, gemessen wird, und
wobei die ersten und/oder die zweiten Elemente (3, 4) durch Extrusion und nachfolgendes Strecken erhalten werden und wobei die ersten Elemente (3) und die zweiten Elemente (4) mindestens ein Material umfassen, ausgewählt aus einer Gruppe umfassend: HDPE, PP.

11. Verfahren zum Herstellen eines Produktes nach einem der vorhergehenden Ansprüche, umfassend die Schritte:
kontinuierliches Bilden einer Vielzahl von ersten Elementen (3') beabstandet voneinander und parallel zu einer Förderrichtung,
kontinuierliches Bilden einer Vielzahl von zweiten (4') Elementen beabstandet voneinander und transversal zur Förderrichtung,
Koppeln der ersten und zweiten Elemente (3', 4') in Verbindungsbereichen (5), um eine monolithische Netzstruktur (2) zu bilden, und
nach dem Koppeln Strecken der Netzstruktur (2) entlang der Ausdehnung der zweiten Elemente und Realisieren einer spezifischen Streckung derer pro Längeneinheit, die im Wesentlichen entlang der zweiten Elemente einheitlich ist.

12. Verfahren nach dem vorhergehenden Anspruch, wobei die spezifische Streckung in einer transversalen Zwischensektion zwischen zwei aufeinanderfolgenden Verbindungsbereichen (5) nicht größer als 10% in Bezug auf die spezifische Streckung einer Transversalsektion der zweiten Elemente (4) im Verbindungsbereich ist, wobei die gestreckten zweiten Elemente (4) eine Variation eines Grades der Kristallinität zwischen einem Zwischenpunkt (4a) zwischen zwei aufeinanderfolgenden Verbindungsbereichen (5) und einem Punkt, der sich in der Verbindungsbereichen (5) befindet, aufweist, die weniger als 8%, insbesondere weniger als 5%, weiter insbesondere weniger als 3%, ist, und wobei die gestreckten zweiten Elemente (4) eine geordnete Molekularstruktur aufweisen und weiter entlang eines Ausdehnungsabschnitts derer, der zwei oder mehr aufeinanderfolgende Verbindungsbereiche (5) umfasst, eine Variation im Grad der Kristallinität aufweist, die weniger als 8%, insbesondere weniger als 5%, weiter insbesondere weniger als 3%, beträgt.

13. Verfahren nach Anspruch 11 oder 12, wobei der Schritt des Koppelns alternativ umfasst:
a) Erzeugen einer lokalisierten Erhitzung der Oberfläche, die für den Kontakt zwischen den ersten und zweiten Elementen (3, 4) vorgesehen ist, Generieren einer im Wesentlichen oberflächlichen Verbindung zwischen den ersten und zweiten Elementen (3, 4) in den Verbindungsbereichen; oder
b) Bringen mindestens eines der ersten und zweiten Elemente (3, 4) an einen Schmelzpunkt und Realisieren einer Oberflächenkohäsion ohne Wesentliches gegenseitiges Durchdringen mit dem Material des anderen Elements, oder
c) Realisieren eines Zusammenhalts definiert durch eine kleine Verbindungsfläche zwischen den ersten und zweiten Elementen (3, 4), oder
d) Kombinieren der Methode, die in Punkt a) beschrieben ist, mit der Methode, die in Punkt c) beschrieben ist, oder
e) Kombinieren der Methode, die in Punkt b) beschrieben ist, mit der Methode nach Punkt c).

14. Verwendung eines Produkts eines Typs nach einem der Ansprüche von 1 bis 10 oder erhalten durch ein Verfahren nach einem der Ansprüche von 11 bis 13, zur Konsolidierung oder Verstärkung von natürlichem oder künstlichem Gelände oder Strukturen.

## Revendications

1. Produit de renforcement (1) pour applications géotechniques, comportant une structure réticulée (2) en matière plastique, comprenant:
une pluralité de premiers éléments (3), séparés les uns des autres,
une pluralité de deuxièmes éléments (4) séparés les uns des autres, qui s'étendent essentiellement dans une direction transversale par rapport aux premiers éléments (3) et sont raccordés aux premiers éléments (3) au niveau d'une pluralité de zones de jonction (5) afin de former une pluralité de mailles de la structure réticulée (2),
où au moins les deuxièmes éléments (4), après leur formation et leur raccordement aux premiers éléments (3), sont étirés le long d'une de leurs extensions et présentent une structure dotée de chaînes de molécules orientées le long de la direction d'étirement, lesdits deuxièmes éléments (4) étirés présentant, le long d'une de leurs extensions, un degré de cristallinité de polymères,
**caractérisé en ce que** les deuxièmes éléments (4) étirés présentent un matériau polymère dont la variation du degré de cristallinité, entre un point intermédiaire (4a) situé entre deux zones de jonction (5) consécutives et un point situé au niveau de la zone de jonction, est inférieure à 8 %, particulièrement inférieure à 5 %, encore plus particulièrement inférieure à 3 %,
où les deuxièmes éléments (4) sont formés à partir d'une matière plastique étirée présentant, le long d'une voie d'extension des deuxièmes éléments (4) comprenant plus de deux zones de jonction (5) consécutives, un changement du degré de cristallinité inférieur à 8 %, particulièrement inférieur à 5 %, encore plus particulièrement inférieur à 3 %.

2. Produit de la revendication 1, **caractérisé en ce que** le degré de cristallinité moyen du polymère formant les deuxièmes éléments (4) est supérieur à 55 %, particulièrement supérieur à 60 %, encore plus particulièrement supérieur à 63 %, le degré de cristallinité moyen du polymère formant les deuxièmes éléments (4) étant supérieur à un degré de cristallinité moyen du polymère formant les premiers éléments (3).

3. Produit selon l'une quelconque des revendications précédentes, **caractérisé en ce que** les éléments étirés présentent une largeur, mesurée dans leur partie transversale, qui est sensiblement constante le long de l'extension correspondante, et **caractérisé en ce que** les deuxièmes éléments (4) présentent, le long de l'extension correspondante, une direction transversale dont la surface est sensiblement constante.

4. Produit selon l'une quelconque des revendications précédentes, **caractérisé en ce que** les premiers éléments (3) sont placés, au moins au niveau des zones de jonction (5), sur une surface d'extension (S1) prévalente, par exemple plane, des premiers éléments et traversent une zone centrale de l'épaisseur des premiers éléments (3) au niveau des zones de jonction (5), les deuxièmes éléments (4) étant placés sur une surface d'extension (S2) prévalente, par exemple plane, des deuxièmes éléments et traversent une zone centrale de l'épaisseur des deuxièmes éléments au niveau de la zone de jonction (5), la surface d'extension (S1) prévalente des premiers éléments (3) étant différente de la surface d'extension (S2) prévalente des deuxièmes éléments (4), la structure réticulée (2) étant sensiblement une structure tridimensionnelle définie par la superposition des premiers et des deuxièmes éléments (3, 4).

5. Produit selon l'une quelconque des revendications précédentes, **caractérisé en ce que** les premiers et les deuxièmes éléments (3, 4), au niveau des zones de jonction (5), définissent une surface de raccordement réciproque (6), et **caractérisé en ce que** le rapport de l'extension (D) de la surface de raccordement réciproque (6) dans une direction perpendiculaire à la direction d'étirement sur la largeur (L) des deuxièmes éléments (4), aussi mesurée le long de la direction perpendiculaire, est inférieur à 0,4, particulièrement inférieur à 0,3, encore plus particulièrement inférieur à 0,2.

6. Produit selon l'une quelconque des revendications précédentes, **caractérisé en ce que** les deuxièmes éléments (4) présentent un rapport d'étirement, défini comme un rapport de la longueur finale des deuxièmes éléments (4) après l'étirement sur une longueur initiale des deuxièmes éléments (4) avant l'action d'étirement, supérieur à 3, éventuellement compris entre 3 et 10, plus éventuellement entre 4 et 8.

7. Produit selon l'une quelconque des revendications précédentes, **caractérisé en ce que** les deuxièmes éléments (4) étirés présentent un étirement spécifique, en une section transversale intermédiaire entre deux zones de jonction (5) consécutives, qui est inférieur ou égal à 10 % par rapport à un étirement spécifique en une section transversale des deuxièmes éléments étirés (10) dans la zone de jonction (5).

8. Produit selon l'une quelconque des revendications précédentes, **caractérisé en ce que** les premiers éléments (3) présentent un rapport d'étirement, défini comme un rapport d'une longueur finale des premiers éléments (3) après l'étirement sur une longueur initiale des premiers éléments (3) avant l'action d'étirement, qui est inférieur au rapport d'étirement des deuxièmes éléments (4), particulièrement compris entre 1 et 1,5, éventuellement **caractérisé en ce que** les premiers éléments (3) ne sont pas soumis à l'action d'étirement.

9. Produit selon l'une quelconque des revendications précédentes, **caractérisé en ce que** le produit inclut une pluralité desdits deuxièmes éléments (4) étirés, placés de manière directement adjacente les uns par rapport aux autres, chacun desdits deuxièmes éléments de ladite pluralité étant formé d'un polymère dont la variation du degré de cristallinité, entre un point intermédiaire (4a) situé entre deux zones de jonction (5) consécutives et un point situé au niveau de la zone de jonction, est inférieure à 8 %, particulièrement inférieure à 5%, encore plus particulièrement inférieure à 3 %, de manière à définir une structure réticulée étirée dont le degré de cristallinité est sensiblement uniforme le long des deuxièmes éléments.

10. Produit selon l'une quelconque des revendications précédentes, **caractérisé en ce que** les premiers éléments (3) présentent une section transversale dont la surface est supérieure à 20 mm², éventuellement supérieure à 30 mm²,
**caractérisé en ce que** les deuxièmes éléments (4) présentent une section transversale dont la surface est supérieure à 10 mm², éventuellement supérieure à 12 mm², en particulier **caractérisé en ce que** les premiers éléments (3) présentent une section transversale au moins 2 fois supérieure, particulièrement 2,5 fois supérieure à la section transversale des deuxièmes éléments (4), et **caractérisé en ce que** la structure réticulée (2) présente un poids spécifique supérieur à 200 g/m², éventuellement compris entre 400 et 1 200 g/m²,
**caractérisé en ce que** la structure réticulée (2) présente une résistance spécifique à la traction le long des éléments étirés, supérieure à 20 KN/m, en particulier comprise entre 20 et 200 KN/m, éventuellement comprise entre 60 et 200 KN/m, la résistance spécifique à la traction étant mesurée selon le procédé décrit exposé la description, et **caractérisé en ce que** les premiers et/ou les deuxièmes éléments (3, 4) sont obtenus par extrusion et étirement ultérieur, et **caractérisé en ce que** les premiers éléments (3) et les deuxièmes éléments (4) comprennent au moins un matériau sélectionné parmi un groupe comprenant: HDPE, PP.

11. Procédé de fabrication d'un produit selon l'une quelconque des revendications précédentes, comprenant les étapes suivantes:
formation en continu d'une pluralité de premiers éléments (3') espacés les uns des autres et parallèles à une direction d'avancement,
formation en continu d'une pluralité de deuxièmes éléments (4') espacés les uns des autres et transversaux à la direction d'avancement,
raccordement des premiers et deuxièmes éléments (3', 4') au niveau des zones de jonction (5) de manière à former une structure réticulée (2) monolithique, et
après le raccordement, étirement de la structure réticulée (2) le long de l'extension des deuxièmes éléments et réalisation d'un étirement spécifique de celle-ci par unité de longueur qui est sensiblement uniforme le long des deuxièmes éléments.

12. Procédé selon la revendication précédente, **caractérisé en ce que** l'étirement spécifique, au niveau d'une section transversale intermédiaire entre deux zones de jonction (5) consécutives est inférieur ou égal à 10 % par rapport à l'étirement spécifique d'une section transversale des deuxièmes éléments (4) au niveau des zones de jonction (5), **caractérisé en ce que** les deuxièmes éléments (4) étirés présentent une variation d'un degré de cristallinité entre un point intermédiaire (4a) situé entre deux zones de jonction (5) consécutives et un point situé au niveau des zones de jonction (5) inférieure à 8 %, particulièrement inférieure à 5 %, encore plus particulièrement inférieure à 3 %, et **caractérisé en ce que** les deuxièmes éléments (4) étirés présentent une structure moléculaire ordonnée et présentent en outre, le long d'une de leurs voies d'extension comprenant deux zones de jonction (5) consécutives ou plus, une variation du degré de cristallinité inférieure à 8 %, particulièrement inférieure à 5 %, encore plus particulièrement inférieure à 3 %.

13. Procédé selon les revendications 11 ou 12, **caractérisé en ce que** l'étape de raccordement comprend en variante:
a) la génération d'un réchauffement localisé de la surface destinée au contact entre les premiers et les deuxièmes éléments (3, 4) provoquant, au niveau des zones de jonction (5), une jonction sensiblement superficielle entre les premiers et les deuxièmes éléments (3, 4); ou
b) le fait d'amener au moins l'un parmi les premiers et les deuxièmes éléments (3, 4) à un point de ramollissement et de réaliser une cohésion de surface sans qu'il y ait une pénétration importante du matériau de l'autre élément, ou
c) la réalisation d'une contrainte définie par une petite surface de raccordement entre les premiers et les deuxièmes éléments (3,4), ou
d) la combinaison du procédé décrit au point a) et du procédé décrit au point c), ou
e) la combinaison du procédé décrit au point b) et de la technique décrite au point c).

14. Utilisation d'un produit, d'un type conforme à l'une quelconque des revendications 1 à 10, ou obtenu selon un procédé de l'une quelconque des revendications 11 à 13 pour la consolidation ou le renforcement de structures ou de terrains naturels ou artificiels.
